(19) Europäisches Patentamt
European Patent Office
Office européen des brevets

(11) **EP 2 303 782 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **09753689.0**

(22) Anmeldetag: **29.05.2009**

(51) Int Cl.:
**C01G 53/04** (2006.01)    **B01J 23/755** (2006.01)

(86) Internationale Anmeldenummer:
**PCT/EP2009/003882**

(87) Internationale Veröffentlichungsnummer:
**WO 2009/144034 (03.12.2009 Gazette 2009/49)**

(54) **VERFAHREN ZUR HERSTELLUNG NANOKRISTALLINER NICKELOXIDE**

METHOD FOR THE PRODUCTION OF NANOCRYSTALLINE NICKEL OXIDES

PROCÉDÉ DE PRODUCTION D'OXYDES DE NICKEL NANOCRISTALLINS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.05.2008 DE 102008026094**

(43) Veröffentlichungstag der Anmeldung:
**06.04.2011 Patentblatt 2011/14**

(73) Patentinhaber: **Süd-Chemie IP GmbH & Co. KG**
**80333 München (DE)**

(72) Erfinder:
• **WOELK, Hans-Joerg**
**83022 Rosenheim (DE)**

• **HAGEMEYER, Alfred**
**83043 Bad Aibling (DE)**
• **GROSSMANN, Frank**
**81667 München (DE)**
• **NEUMANN, Silvia**
**83109 Großkarolinenfeld (DE)**

(74) Vertreter: **Silber, Anton et al**
**Clariant Produkte (Deutschland) GmbH**
**Patent & License Management**
**Lenbachplatz 6**
**80333 München (DE)**

(56) Entgegenhaltungen:
WO-A-2006/027270    WO-A-2008/021256
WO-A-2008/028681    DE-A1-102006 032 452
US-A- 5 600 030

**Beschreibung**

Die vorliegende Erfindung betrifft ein Verfahren zur Herstellung von nanokristallinen Nickeloxiden , die als Katalysatoren und Precursoren und Komponenten für Katalysatoren, insbesondere für Hydrierungsreaktionen, verwendet werden können. Nickelkatalysatoren sind dem Fachmann z.B. unter der Bezeichnung Raney-Nickel bekannt. Dabei handelt es sich um eine Nickel-Aluminium-Legierung, die durch Herauslösen eines Großteils des Aluminiums mit Natronlauge zum aktivierten Raney-Nickel umgesetzt wird. Durch die daraus resultierende poröse Struktur und somit große BET-Oberfläche besitzt Raney-Nickel eine hohe katalytische Aktivität, insbesondere bei Hydrierungsreaktionen. Kommerziell erhältliches Raney-Nickel weist eine durchschnittliche Nickeloberfläche von bis zu 100 $m^2/g$ auf. Nachteilig bei der Verwendung von Raney-Nickel ist jedoch, dass es aufgrund seiner großen BET-Oberfläche und Reaktivität sich an Luft spontan und explosionsartig zersetzen kann. Somit ist insbesondere im großtechnischen Einsatz die Verwendung von Raney-Nickel problematisch.

Anstelle von Raney-Nickel als Katalysator kann auch Nickeloxid als Precursor eingesetzt werden, welcher durch Reduktion in einen aktiven Nickelkatalysator umgewandelt werden kann. Allerdings hat Nickeloxid, das nach im Stand der Technik bekannten Methoden hergestellt wird, eine zu geringe BET-Oberfläche, so dass die katalytische Aktivität des Nickels, das aus dem Nickeloxid durch Reduktion erhalten wird, häufig nicht für chemische Umsetzungen ausreichend ist

Ein Verfahren zur Herstellung mehrkomponentiger Metalloxidverbindungen in einer pulsierenden Strömung ist aus WO 2006/027270 A2 bekannt.

Die Aufgabe der vorliegenden Erfindung bestand somit darin, ein Verfahren bereit zu stellen, bei dem Nickeloxid mit einer möglichst großen BET-Oberfläche und hoher katalytischer Aktivität (nach Reduktion zum Nickel-Metall) erhalten werden kann. Das Verfahren soll außerdem einfach durchführbar und kostengünstig sein.

Die Aufgabe wird gelöst durch ein Verfahren zur Herstellung eines nanokristallinen Nickeloxidmaterials, umfassend die Schritte

a) des Einbringens einer Nickelausgangsverbindung in eine Reaktionskammer mittels eines Trägerfluids, wobei die Nickelausgangsverbindung ein anorganisches Nickelsalz ist und wobei die Nickelausgangsverbindung in Form einer Lösung, Aufschlämmung, Suspension oder in festem Aggregatzustand in die Reaktionskammer eingebracht wird,
b) einer thermischen Behandlung der Nickelausgangsverbindung in einer Behandlungszone mittels einer pulsierenden Strömung bei einer Temperatur von 200 bis 550 °C,
c) des Bildens von nanokristallinem Nickeloxidmaterial,
d) des Ausbringens des in Schritt b) und c) erhaltenen nanokristallinen Nickeloxidmaterials aus dem Reaktor.

Überraschenderweise wurde gefunden, dass das Verfahren bei relativ niedrigen Temperaturen von 200 bis 550 °C, besonders bevorzugt von 230 bis 500 °C, ganz besonders bevorzugt von 250 bis 480 °C durchgeführt werden kann. Bislang waren im Stand der Technik für ähnliche Verfahren bevorzugte Temperaturen von mehr als 700 °C, und zwar bis zu 1400 °C bekannt.

Ganz besonders überraschend wurde erfindungsgemäß gefunden, dass durch das erfindungsgemäße Verfahren der Kristallisationsprozess des Nickeloxids gezielt gesteuert werden kann, insbesondere die Größe der Kristallite und die Porengrößenverteilung des Nickeloxids. Diese Parameter können auch noch durch die Verweilzeit in der Flamme bzw. durch die Reaktortemperatur weiter vorteilhaft beeinflusst werden. Durch die pulsierende thermische Behandlung werden die entstehenden nanokristallinen Nickeloxidpartikel daran gehindert zu agglomerieren. Typischerweise werden die nanokristallinen Partikel sofort durch den Strom an heißem Gas in eine kältere Zone überführt, wo die Nickeloxidkristallite zum Teil mit Durchmessern von weniger als 20 nm erhalten werden.

Dies führt bei den so erhältlichen Nickeloxidkristalliten zu sehr hohen BET-Oberflächen von > 50 $m^2/g$, besonders bevorzugt > 100 $m^2/g$ und ganz besonders bevorzugt > 150 $m^2/g$. Insbesondere konnten nach dem erfindungsgemäßen Verfahren Nickeloxide mit einer BET-Oberfläche von bis zu 350 $m^2/g$, bevorzugt 200 bis 300 $m^2/g$ erhalten werden. Die Bestimmung der BET-Oberfläche erfolgt gemäß DIN 66132 (nach der Methode von Brunauer, Emmett und Teller).

Als vorteilhaft hat sich herausgestellt, wenn das Nickelausgangsmaterial auf einen Teilchendurchmesser von < 10 $\mu$m, bevorzugt < 5 $\mu$m, besonders bevorzugt < 2 $\mu$m und insbesondere < 1 $\mu$m gemahlen wird. Vorzugsweise erfolgt die Bestimmung der Teilchengröße durch das Debye-Scherrer-Verfahren mit Röntgenbeugung und der damit verbundenen Rietveld-Verfeinerung.

Das von Peter Debye und Paul Scherrer sowie unabhängig davon von Albert Hull entwickelte Verfahren arbeitet nicht mit Einkristallen, sondern mit pulverförmigen Proben. Das Pulver besteht aus einer Reihe zufällig angeordneter Kristallite, so dass auch die Netzebenen zufällig im Raum angeordnet sind und so einige Kristallite immer die Bragg'sche Reflexionsbedingung erfüllen. Zusätzlich rotiert die Probe um eine Achse senkrecht zum einfallenden Strahl. Um die Probe herum bilden sich Kegelmäntel aus Röntgenstrahlen, welche aus der konstruktiven Interferenz stammen. Um die Probe liegt ein fotographischer Film, auf dem sich die Kegelmäntel als Reflexe abzeichnen. Aus den Abständen der vom einfallenden Strahl auf dem Film aufgenommenen Reflexe lässt sich der Glanzwinkel θ berechnen:

$$x/2\pi R = 4\ \theta/360°$$

Der Abstand x des Beugungsreflexes auf dem Film vom einfallenden Strahl verhält sich zum Umfang der Kamera x/2nR wie der Öffnungswinkel des entsprechenden Beugungskegels zu 360°. Hinsichtlich der röntgendiffraktometrischen Rietveld Analyse verweisen wir zudem auf R. Kriegel, Ch. Kaps, Thüringer Werkstofftag "Röntgendiffraktometrische Rietveld-Analyse von nanokristallinen Precursoren und Keramiken", Verlag Dr. Köster, Berlin 2004, Seiten 51-56, dessen Offenbarung hierin durch Bezugnahme aufgenommen wird.

Eine geringere Teilchengröße des Nickelausgangsmaterials führt zu einer weiteren Erhöhung der spezifischen Oberfläche des durch das erfindungsgemäße Verfahren erhaltenen Nickeloxids, wobei dessen Restkohlenstoffgehalt dagegen sinkt. Ursache dafür ist der schnellere Wärmetransport ins Innere des Teilchens bei der Umsetzung im pulsierenden Wirbelschichtreaktor und damit die Schaffung der notwendigen Bedingungen für eine Reaktionsumsetzung auch im Teilchen selbst und nicht nur im äußeren Schalenbereich.

Die Einstellung der bevorzugten Teilchengröße erfolgt vorzugsweise durch Feuchtvermahlen, das heißt durch Vermahlen einer Suspension der Nickelausgangsverbindung in einem Dispergiermittel. Das Vermahlen kann beispielsweise in einer Kugelmühle, Perlenmühle, Schlagmühle, einer Ringspaltmühle oder anderen im Stand der Technik bekannten Mühlen erfolgen. Auch eine Vorbehandlung der Suspension mittels eines Dispergierers (zum Beispiel Ultra Turrax T50) vor dem Vermahlen hat sich als vorteilhaft herausgestellt.

In dem erfindungsgemäßen Verfahren können Suspensionen ohne zusätzliche Filtrations- und/oder Trocknungsschritte bzw. ohne Zugabe von zusätzlichen Lösungsmitteln innerhalb eines sehr kurzen Zeitraumes, typischerweise innerhalb weniger Millisekunden, bei vergleichsweise niedrigeren Temperaturen als bei den bekannten Verfahren des Standes der Technik üblich, kalziniert werden. Die entstehenden Nickelnanokristallite weisen sehr hohe BET-Oberflächen auf und ergeben nach einer Reduktion zum Nickelmetall einen Nickelkatalysator mit erhöhter Reaktivität, verbessertem Umsatz und verbesserter Selektivität.

Durch die annähernd gleiche Verweilzeit jedes Nickeloxidpartikels in dem durch das Verfahren erzeugten homogenen Temperaturfeld entsteht ein äußerst homogenes Endprodukt mit enger monomodaler Teilchenverteilung. Eine Vorrichtung zur Durchführung des erfindungsgemäßen Verfahrens bei der Herstellung derartiger monomodaler nanokristalliner Metalloxidpulver ist beispielsweise aus der DE 101 09 892 A1 bekannt. Im Gegensatz zu der dort beschriebenen Vorrichtung und dem dort offenbarten Verfahren benötigt das vorliegende Verfahren jedoch keinen vorgelagerten Verdampfungsschritt, in dem der Ausgangsstoff, d.h. die Nickelausgangsverbindung, auf eine Verdampfungstemperatur erwärmt wird.

Die Nickelausgangsverbindung, aus der die Nickeloxidmaterialien durch das erfindungsgemäße Verfahren hergestellt werden, werden direkt über ein Trägerfluid, insbesondere ein Trägergas, vorzugsweise ein inertes Trägergas, wie beispielsweise Stickstoff, Argon, usw., in so genannte Reaktionskammern, d.h. in die Brennkammer, eingeführt. An die Reaktionskammer ist abgasseitig ein Resonanzrohr mit einem gegenüber der Reaktionskammer deutlich verringertem Strömungsquerschnitt angeschlossen. Der Brennkammerboden ist mit mehreren Ventilen zum Eintritt der Verbrennungsluft in die Brennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen "flammenlosen" Temperaturfeldes sich vorwiegend im Resonanzrohr pulsierend ausbreiten. Es bildet sich ein so genannter Helmholtzresonator mit pulsierender Strömung aus mit einer Pulsationsfrequenz zwischen 3 und 150 Hz, bevorzugt 10 bis 110 Hz.

Die Materialzuführung in die Reaktionskammer erfolgt typischerweise entweder mit einem Injektor, mit einer geeigneten Zweistoffdüse, Dreistoffdüse oder in einem Schenkdosierer.

Bevorzugt wird die Nickelausgangsverbindung in verdüster Form in die Reaktionskammer eingebracht, sodass eine feine Verteilung im Bereich der Behandlungszonen gewährleistet ist.

Als Nickelausgangsverbindung wird bevorzugt ein anorganisches Nickelsalz verwendet. Bevorzugte Nickelsalze sind Nickelnitrat und ein Nickelhydroxid, auch in Form ihrer Hydrate. Als ein Nickelhydroxid kann erfindungsgemäß auch basisches Nickelcarbonat in Form einer Lösung, Suspension oder Paste betrachtet werden.

Neben der Nickelausgangsverbindung können auch weitere Verbindungen, beispielsweise Träger oder deren Vorstufen (z.B. Aluminiumnitrat) Binder und/oder Promotoren gleichzeitig mit der Nickelausgangsverbindung verdüst werden. Vorteilhaft kann beispielsweise eine Aluminiumverbindung mit verdüst werden, um ein Nickel-Aluminium-System zu erhalten, welches durch Reduktion in einen Nickel-Aluminium-Katalysator (vergleichbar mit Raney-Nickel) umgewandelt werden kann. Auch ist es möglich, beispielsweise Aluminiumnitrat mit einer Nickelausgangsverbindung zu verdüsen, wobei durch die Kalzinierung im Pulsationsreaktor ein auf Aluminiumoxid geträgertes Nickeloxid oder ein nickelhaltiges, Ni/Al Mischoxid erhalten werden kann.

Auch andere Elemente oder Verbindungen können eingesetzt werden, insbesondere auch Promotoren, wie z.B. die Übergangsmetalle oder Aluminium. Bevorzugte Übergangsmetalle sind W, Pd, Pt, Rh, Ru, Ag, Nb, Cu, Cr, Co, Mo, Fe und Mn. Die Promotoren werden vorzugsweise in Form ihrer Salze mit dem Nickelausgangsmaterial im Pulsationsreaktor mitverdüst und umgesetzt. Die Promotoren können aber auch im Anschluss an die Herstellung des Nickeloxids auf herkömmliche Weise, beispielsweise durch einen Metalleintausch oder eine Imprägnierung in das Nickeloxidmaterial eingebracht werden.

Durch die oben beschriebenen Methoden kommt man sehr einfach zu mit den obengenannten Promotoren dotierten nickelhaltigen Mischungen oder Mischverbindungen.

Nach der thermischen Behandlung werden die entstandenen nanokristallinen Nickeloxide (oder nickelhaltigen Mischungen oder Mischverbindungen), wenn möglich mittels des Trägerfluids, sofort in eine kältere Zone der Reaktionskammer überführt, sodass sie in der kälteren Zone abgeschieden und ausgetragen werden können. Die Ausbeute des erfindungsgemäßen Verfahrens beträgt nahezu 100%, da das entstehende Produkt vollständig aus dem Reaktor ausgetragen werden kann.

Typischerweise wird das Verfahren bei einem Druck im Bereich von Normaldruck bis etwa 40 bar durchgeführt.

Es wurde gefunden, dass das durch das erfindungsgemäße Verfahren erhältliche nanokristalline Nickeloxidmaterial bevorzugt eine Kristallitgröße im Bereich von 4 nm bis 100 $\mu$m, mehr bevorzugt von 5 nm bis 100 $\mu$m, ganz besonders bevorzugt 6 bis 100 nm aufweist, was, wie vorstehend schon ausgeführt, durch die Pulsation der thermischen Behandlung bevorzugt eingestellt werden kann. Die Bestimmung der Teilchengröße kann durch XRD oder TEM erfolgen.

Weiterhin werden durch das erfindungsgemäße Verfahren Nickeloxidteilchen erhalten, die eine BET-Oberfläche von vorzugsweise > 50 m$^2$/g, besonders bevorzugt > 100 m$^2$/g und besonders bevorzugt > 150 m$^2$/g besitzen. Insbesondere konnten nach dem erfindungsgemäßen Verfahren Nickeloxide mit einer BET-Oberfläche von bis zu 350 m$^2$/g, bevorzugt von 200 bis 300 m$^2$/g erhalten werden. Dabei sinkt der Restkohlenstoffgehalt auf $\leq$ 50 Gew%, bevorzugt auf $\leq$ 20 Gew%. Besonders bevorzugt beträgt der Restkohlenstoffgehalt $\leq$ 7,5 Gew%, noch mehr bevorzugt $\leq$ 3 Gew% und insbesondere $\leq$ 1 Gew%.

Ein Vorteil des durch das erfindungsgemäße Verfahren erhaltenen Nickeloxidmaterials liegt darin, dass es nach Reduktion zum Nickelmetall als Ersatz für Raney-Nickel verwendet werden kann und in weitaus geringerem Maße explosionsgefährdet ist. Es eignet sich somit hervorragend für den großtechnischen Einsatz. Das durch das erfindungsgemäße Verfahren erhaltene Nickeloxidmaterial eignet sich nach Reduktion zum Nickelmetall besonders gut als Hydrierkatalysator, beispielsweise zur Umsetzung von bzw. zur Reduktion von Komponenten mit Mehrfachbindung, wie zum Beispiel Alkine, Alkene, Nitride, Polyamine, Aromaten und Stoffen der Carbonylgruppe. Zusätzlich können mit der durch das erfindungsgemäße Verfahren erhaltenen Nickeloxidverbindung nach Reduktion zum Nickelmetall Heteroatom-Heteroatombindungen von organischen Nitroverbindungen, zum Beispiel Nitrosamine, reduziert werden. Die Alkylierung von Aminen, die Aminierung von Alkoholen, eine Methanisierung, Polymerisationsreaktionen oder die Kumada-Kopplung stellen weitere Anwendungsgebiete dar. Im Vergleich zu Raney-Nickel zeigt das durch das erfindungsgemäße Verfahren erhaltene NiO nach Reduktion insbesondere bei der Hydrierung von C=C-Doppelbindungen bessere Ergebnisse.

Das durch das erfindungsgemäße Verfahren erhaltene Nickeloxidmaterial kann mit einem geeigneten Trägermaterial, beispielsweise Aluminiumoxid, und einem geeigneten, dem Fachmann an sich bekannten Bindemittel, beispielsweise Boehmit oder Pseudoboehmit, zu einem Formkörper extrudiert werden. Ebenso kann auch ein Aluminiumprecursor verwendet werden, z.B. Aluminiumnitrat oder peptisiertes Boehmit, welches zusammen mit der Nickelausgangsverbindung nach dem erfindungsgemäßen Verfahren im Pulsationsreaktor umgesetzt wird. Ein so hergestelltes Nickelmischoxid bzw. die oxidische Mischung kann dann sofort in eine gewünschte Form verpresst werden, beispielsweise in eine einfache Tablettenform. Das Ni/Al-Molverhältnis wird dabei bevorzugt an das von herkömmlichen Nickel-Hydrierkatalysatoren angepasst und beträgt bevorzugt 60:40 bis 40:60, bevorzugt 55:45 (jeweils NiO/Al$_2$O$_3$).

Die Erfindung soll nun anhand der nachstehenden und nicht als einschränkend zu verstehenden Ausführungsbeispiele näher erläutert werden. Die verwendete Vorrichtung entspricht dabei wie vorstehend schon erwähnt weitgehend der in der DE 101 09 892 A1 beschrieben Vorrichtung, mit dem Unterschied, dass die zur Durchführung des erfindungsgemäßen Verfahrens verwendete Vorrichtung keine Verdampfervorstufe aufwies.

**Ausführungsbeispiele**

**Beispiel 1: Herstellung von NiO**

Als Ausgangsverbindung diente Nickelnitrat in Form einer wässrigen Lösung mit einem Nickelanteil von 13 Gew.-%, welches in die pulsierende Wirbelschicht bei verschiedenen Prozesstemperaturen eingedüst wurde. Die Ergebnisse sind in Tabelle 1 zusammengefasst:

Tabelle 1 - Versuchsergebnisse - NiO aus Nickelnitratlösung

| Versuchspunkt | Prozesstemperatur | Spezifische Oberfläche in °C (nach BET) in $m^2/g$ |
|---|---|---|
| 6 | 450 | 86 |
| 7 | 425 | 91 |
| 8 | 400 | 95 |
| 9 | 380 | 101 |
| 10 | 325 | 36 |

Mit abnehmender Prozesstemperatur nimmt die spezifische Oberfläche des hergestellten NiO bis zu einem Maximum bei 380°C zu; bei noch niedrigeren Prozesstemperaturen findet ein unvollständiger Stoffumsatz statt - die Produktfarbe ist dann grünlich, was ein Anzeichen für nicht umgesetztes Nickelnitrat ist und die spezifische Oberfläche nimmt ab.

**Beispiel 2:**

Der Versuch aus Beispiel 1 wurde wiederholt, wobei jedoch gleichzeitig mit dem Nickelnitrat noch eine äquimolare Menge Aluminiumnitrat verdüst wurde um eine oxidische Mischung aus $Al_2O_3$ und NiO zu erhalten. Das $NiO/Al_2O_3$-Verhältnis wurde an dasjenige von typischen Hydrierkatalysatoren angepasst und betrug 55:45.
Der Versuch wurde wiederholt, wobei statt Aluminiumnitrat peptisiertes Boehmit verwendet wurde.
Für beide Mischverbindungen wurden in zwei Versuchen BET-Oberflächen von 120 und 130 $m^2/g$ erhalten.

**Beispiel 3: Herstellung von Nickeloxid aus einem Nickelhydroxid**

Nickelhydroxid in Form von basischem Nickelcarbonat $NiCO_3 \cdot 2\,Ni(OH)_2$ der Fa. Aldrich wurde zu einer Suspension verarbeitet. Die mittlere Teilchengröße des Feststoffes beträgt 5.4 $\mu$m. Der Feststoffgehalt wurde bei der Nickelcarbonat/Nickelhydroxidsuspension auf 16 % eingestellt. Die Suspension wurde bei einer Prozesstemperatur von 460 °C in die Wirbelschicht eingedüst. Die Analysenergebnisse sind in Tabelle 2 zusammengefasst:

Tabelle 2: Versuchsergebnisse der Herstellung von Nickeloxid aus basischem Nickelcarbonat $NiCO_3 \cdot 2\,Ni(OH)_2$

| Versuchspunkt | Prozesstemperatur in °C | Spezifische Oberfläche (nach BET) in $m^2/g$ | Gesamtkohlenstoff $C_{ges}$ in Gew% |
|---|---|---|---|
| 11 | 460 | 62 | 0.2 |

Der Gesamtkohlenstoffgehalt von 0.2 Gew% entspricht der besonders bevorzugten Spezifikation des Kohlenstoffgehalts, welcher vorzugsweise unter 1 Gew% liegen sollte. Bei der Verwendung von basischem Nickelcarbonat wurde jedoch keine mechanische Vorbehandlung der Suspension vorgenommen.

**Beispiel 4: Verringerung der Prozesstemperatur und Teilchengröße des Ausgangsmaterials**

Das verwendete Nickelhydroxid ($NiCO_3 \cdot 2\,Ni(OH)_2$) hat eine mittlere Teilchengröße von 5.4 $\mu$m. Die vollständige thermische Zersetzung derartig großer Rohstoffteilchen erweist sich in der pulsierenden Wirbelschicht aufgrund der sehr kurzen Verweilzeiten als problematisch. Eine vollständige Umsetzung kann dabei nur durch die Erhöhung der Prozesstemperaturen erreicht werden, wobei dadurch gerade im Oberflächenbereich eine verstärkte Sinterung einsetzt. Die Folge davon sind niedrige spezifische Oberflächen.
Folglich wurde in diesem Beispiel die Teilchengröße des Rohmaterials durch Aufmahlung reduziert. Kleinere Teilchengrößen führen zu einem reduzierten Temperaturgradienten ins Teilcheninnere und damit zu einer besseren Reaktionsumsetzung bei bereits niedrigeren Prozesstemperaturen im Heißgas.
Dafür wurde das Nickelhydroxid ($NiCO_3 \cdot 2\,Ni(OH)_2$) mit destilliertem Wasser zu einer 40 Gew.-%-igen Nickelcarbonat-Suspension versetzt und 3x in einer Ringspaltmühle (Fa. *Fryma Koruma*, Typ MS 12) mechanisch behandelt:

Tabelle 3 - Mahlung von Nickelhydroxid ($NiCO_3 \cdot 2\,Ni(OH)_2$) in der Ringspaltmühle

| Mahlgang | mittlere Teilchengröße $d_{50}$ [$\mu$m] |
|---|---|
| Ausgang | 5.4 |
| 1. Durchgang | 1.7 |
| 2. Durchgang | 1.1 |
| 3. Durchgang | 0.8 |

Die Feststoffkonzentration der gewonnenen Suspension wurde anschließend durch Zugabe von Wasser auf 16 Gew% eingestellt.

Die Anlagenkonfiguration sowie die eingestellten Prozessparameter entsprachen ebenfalls den Einstellungen der bisherigen Beispiele. Das Versuchsmaterial (Suspension) wurde mittels Zweistoffdüse mit einer Aufgabemenge von 14 kg/h Suspension in den Reaktor durch feinteiliges Versprühen aufgegeben. Die Rohstoffsuspension wurde während des gesamten Versuchs gerührt, um ein Absetzen zu verhindern.

Für den 1. Versuchspunkt wurde eine Prozess-Starttemperatur von 450 °C festgelegt. Anschließend wurde in 25 K Schritten die Prozesstemperatur solange reduziert, bis der Gesamtkohlenstoffgehalt auf Werte von > 1 Gew% anstieg. Ziel dabei war das Optimum der spezifischen Oberfläche festzustellen. Die Versuchsergebnisse sind in Tabelle 5 zusammengefasst:

Tabelle 4 - Versuchsergebnisse - NiO aus basischem Nickelcarbonat

| Versuchspunkt | Prozesstemperatur [°C] | Spezifische Oberfläche (nach BET) [$m^2$/g] | Gesamtkohlenst offgehalt $C_{ges}$ [Gew%] |
|---|---|---|---|
| 1 | 450 | 77 | 0.3 |
| 2 | 425 | 84 | 0.4 |
| 3 | 400 | 94 | 0.5 |
| 4 | 375 | 121 | 0.9 |
| 5 | 350 | 134 | 1.4 |

Wie aus Tabelle 4 ersichtlich wird, konnte ein feinteiliges NiO mit einer spezifischen Oberfläche von 121 $m^2$/g und einem Gesamtkohlenstoffgehalt von < 1 Gew% erhalten werden. Das Maximum der spezifischen Oberfläche lag bei 134 $m^2$/g bei einem etwas höheren Gesamtkohlenstoffgehalt von 1,4 Gew%.

### Beispiel 5: Herstellung von Nickeloxid aus basischer Nickelcarbonatpaste

Als Nickelausgangsverbindung wurde basische Nickelcarbonatpaste $Ni(OH)_2CO_3$ der Firma OMG Kokkola Chemicals OY verwendet, welche als eine Nickelhydroxidverbindung betrachtet werden kann. Mit dieser Paste konnte ein Nickeloxid mit folgenden Spezifikationen erhalten werden:

Spezifische Oberfläche nach BET: 244 +/- 5 $m^2$/g
Gesamtkohlenstoff: 1,0 +/- 0,05 Gew%
Durchschnittliche Partikelgröße: $d_{50}$ = 13 $\mu$m
Farbe: schwarz
Kristallographische Phase: kristallin(XRD)

### Hydrierversuche:

Im Folgenden wurden verschiedene Katalysatorproben hinsichtlich Ihrer katalytischen Aktivität bei der Hydrierung von $\alpha$-Methylstyrol, Benzaldehyd und Zimtaldehyd getestet. Insgesamt wurden fünf Proben verwendet, wobei die Probe 1 ein reines Nickeloxid ist und die Proben 2 - 4 Nickeloxide, welche durch gemeinsames Versprühen von Nickelnitrat und Aluminiumnitrat im Pulsationsreaktor erhalten wurden.

Als Vergleichskatalysator diente in allen Fällen Raney-Nickel BK 111 W mit einem Wasseranteil von ca. 50 % (Degussa).

**Beispiel 6: Reduktion von $\alpha$-Methylstyrol**

In diesem Hydrierversuch wurde frischdestilliertes $\alpha$-Methylstyrol mit einem Reinheitsgrad von >99,0 % verwendet. Als Lösungsmittel diente 2-Propanol (HPLC grade). Ferner wurden technisches Wasserstoffgas 4.0 und technisches Stickstoffgas 4.0 der Firma Siad verwendet.

Vor der Hydrierung des $\alpha$-Methylstyrols wurden die Nickelkatalysatoren (Proben 1 bis 5) in einer 200 ml-Glasapparatur nach folgendem Programm aktiviert:

(1) Spülen der den Katalysator enthaltenden Apparatur mit Stickstoff für 30 Minuten bei einem Fluss von 50 ml/min;

(2) Erhitzen unter Stickstoff auf 250 °C bei einem Temperaturanstieg von 5 °C/min und einem Stickstofffluss von 50 ml/min;

(3) Austausch des Stickstoffs durch Wasserstoff innerhalb 5 Minuten bei einem Fluss von 50 ml/min;

(4) Erhöhen der Temperatur auf 420 °C mit 5 °C/min und einem Wasserstofffluss von 50 ml/min;

(5) Reduktion des Katalysators mit Wasserstoff bei 420 °C für 180 Minuten bei einem Wasserstofffluss von 50 ml/min;

(6) Abkühlen auf 25 °C mit innerhalb ca. 15 Minuten bei einem Wasserstofffluss von 50 ml/min;

(7) Austausch von Wasserstoff durch Stickstoff innerhalb 5 Minuten bei einem Fluss von 50 ml/min;

Das Raney-Nickel in Form einer wässrigen Suspension wurde dreimal mit 2-Propanol gewaschen, bevor die kinetischen Versuche unternommen wurden. Der Trockenanteil des Nickels wurde zu 100 mg berechnet.

Die kinetischen Messungen wurden in einem Rührautoklaven isotherm bei 25°C unter nahezu konstanten Wasserstoffdruck (0,15 - 0,14 MPa) in 2-Propanol als Lösungsmittel durchgeführt. Alle Messungen wurden in der kinetischen Region ausgeführt.

Folgende Mengen wurden für das kinetische Experiment eingesetzt.

1. $\alpha$-Methylstyrol: 5,0 g
2. 2-Propanol: 95 ml
3. Nickelkatalysator: 100 mg
4. Raney-Nickel: 200 mg (Feuchtkatalysator, welcher dreimal mit 2-Propanol vor der Verwendung gewaschen wurde, der Trockenanteil des Nickels wurde als 100 mg berechnet)

Der Katalysator wurde in den Reaktor als Suspension mit dem 2-Propanol gegeben und dazu wurde eine Lösung des $\alpha$-Methylstyrols in 2-Propanol zugefügt. Die Umgebungsatmosphäre des Reaktors wurde durch Wasserstoff ersetzt, wobei der Autoklav dreimal mit Stickstoff und dann dreimal mit Wasserstoff gespült wurde. Der Beginn des Rührens wurde als Startpunkt für das kinetische Experiment (t = 0 min) betrachtet. In dem Moment, als die Reaktionsrate stark abfiel, wurde das Rühren beendet. Die Hydrierung wurde überwacht, indem während der Reaktion Proben gezogen wurden, welche durch GC/MS-Analyse ausgewertet wurden. Als Säule wurde eine CP-Sil 8,30m x 0,25 mm x5 $\mu$m verwendet.

Die Ergebnisse der Reduktion können der folgenden Tabelle 5 entnommen werden:

Tabelle 5:

| Katalysator | Halbwertszeit der $\alpha$-Methyl-styrolhydrierung $T_{0.5}$ [min] |
| --- | --- |
| Probe 1 | 88 |
| Probe 2 | 69 |
| Probe 3 | 34 |
| Probe 4 | 17 |
| Probe 5 | 9 |
| Probe Raney-Nickel BK 111 W | 92 |

Wie anhand der Ergebnisse der Reduktion von $\alpha$-Methylstyrol erkennbar ist, sind alle durch Reduktion hergestellten Nickelkatalysatoren besser in der Performance als handelsübliches Raney-Nickel BK 111 W.

### Beispiel 7: Reduktion von Benzaldehyd

Die Katalysatoraktivierung erfolgte analog zu der im Beispiel 6 genannten. Als Lösungsmittel wurde ebenfalls 2-Propanol verwendet und ebenso wurden die technischen Gase Wasserstoff und Stickstoff der Reinheit 4.0 bei diesem Versuch eingesetzt. Das zu reduzierende Benzaldehyd wurde frisch destilliert, wobei eine Reinheit von >99,0 % resultierte.

Folgende Mengen der Reagenzien wurden eingesetzt:

Benzaldehyd:        5,0 g
2-Propanol:         95 ml
Nickelkatalysator:  100 mg
Raney-Nickel:       200 mg (Feuchtkatalysator, welcher dreimal mit 2-Propanol vor der Verwendung gewaschen wurde, der Trockenanteil des Nickels wurde als 100 mg berechnet)

Es wurde lediglich die Probe 3 verwendet, die im vorhergehenden Versuch innerhalb der durch das erfindungsgemäße Verfahren erhaltenen Nickelkatalysatoren eine mittlere Performance zeigte.

Der Reduktionsversuch erfolgte analog zu dem im Beispiel 6.

Die Ergebnisse der Reduktion können der folgenden Tabelle 6 entnommen werden.

Tabelle 6

| Katalysator | Halbwertszeit der Benzaldehydhydrierung $T_{0.5}$ [min] |
|---|---|
| Probe 3 | 12 |
| Probe Raney-Nickel BK 111 W | 29 |

Wie anhand der Tabelle zu sehen ist, zeigt die Probe 3 einen um mehr als 50 % verbesserten Wert gegenüber Raney-Nickel BK 111 W bei der Reduktion von Benzaldehyd.

### Beispiel 8: Reduktion von Zimtaldeyhd

Im folgenden Versuch wurde Zimtaldehyd mit den Proben 3, 4 und 5 reduziert und wiederum Raney-Nickel BK 111 W als Vergleich verwendet. Die Probenvorbereitung der Katalysatoren verlief analog zu der in Beispiel 6 und 7. Ebenso wurde die Reaktionsführung analog zu der im Beispiel 6 und 7 genannten durchgeführt.

Folgende Mengen der Substanzen wurden eingesetzt:

Zimtaldehyd:        5,0 g
2-Propanol:         95 ml
Nickelkatalysator:  100 mg
Raney-Nickel:       200 mg (Feuchtkatalysator, welcher dreimal mit 2-Propanol vor der Verwendung gewaschen wurde, der Trockenanteil des Nickels wurde als 100 mg berechnet)

Die Ergebnisse von Zimtaldehyd sind aus der folgenden Tabelle 7 ersichtlich:

Tabelle 7

| Katalysator | Halbwertszeit der Zimtaldehydhydrierung $T_{0.5}$ [min] |
|---|---|
| Probe 2 | 18 |
| Probe 3 | 10 |
| Probe 4 | 45 |
| Probe Raney-Nickel BK 111 W | 49 |

Wie anhand der Tabelle zu erkennen ist, weisen die durch das erfindungsgemäße Verfahren erhaltenen Katalysatoren gegenüber Raney-Nickel BK 111 W bei der Reduktion von Zimtaldehyd wesentlich verbesserte Reaktivitäten auf.

**Patentansprüche**

1.  Verfahren zur Herstellung eines nanokristallinen Nickeloxidmaterials, umfassend die Schritte

    a) des Einbringens einer Nickelausgangsverbindung in eine Reaktionskammer mittels eines Trägerfluids, wobei die Nickelausgangsverbindung ein anorganisches Nickelsalz ist und wobei die Nickelausgangsverbindung in Form einer Lösung, Aufschlämmung, Suspension oder in festem Aggregatszustand in die Reaktionskammer eingebracht wird,
    b) einer thermischen Behandlung der Nickelausgangsverbindung in einer Behandlungszone mittels einer pulsierenden Strömung bei einer Temperatur von 200 bis 550 °C,
    c) des Bildens von nanokristallinem Nickeloxidmaterial,
    d) des Ausbringens des in Schritt b) und c) erhaltenen nanokristallinen Nickeloxidmaterials aus dem Reaktor.

2.  Verfahren nach Anspruch 1, **dadurch kennzeichnet, dass** die Nickelausgangsverbindung eine durchschnittliche Teilchengröße von kleiner 10 $\mu$m besitzt.

3.  Verfahren nach Anspruch 2, **dadurch gekennzeichnet, dass** die Teilchengröße durch Vermahlen einer Suspension der Nickelausgangsverbindung erhalten wird.

4.  Verfahren nach einem der Ansprüche 1 bis 3, **dadurch gekennzeichnet, dass** das anorganische Nickelsalz Nickelnitrat oder ein Nickelhydroxid ist.

5.  Verfahren nach einem der Ansprüche 1 bis 4, **dadurch gekennzeichnet, dass** neben der Nickelausgangsverbindung noch weitere Verbindungen in dem Verfahren eingesetzt werden.

6.  Verfahren nach Anspruch 5, **dadurch gekennzeichnet, dass** die weiteren Verbindungen Träger oder deren Vorstufen, Binder und/oder Promotoren sind.

7.  Verfahren nach Anspruch 6, **dadurch gekennzeichnet, dass** als Promotor Aluminium oder ein Übergangsmetall verwendet wird.

8.  Verfahren nach Anspruch 7, **dadurch gekennzeichnet, dass** das Übergangsmetall ausgewählt ist aus der Gruppe bestehend aus W, Pd, Pt, Rh, Ru, Ag, Nb, Cu, Cr, Co, Mo, Fe und Mn.

**Claims**

1.  Process for producing a nanocrystalline nickel oxide material, which comprises the steps

    a) introduction of a nickel starting compound into a reaction chamber by means of a carrier fluid, where the nickel starting compound is an inorganic nickel salt and the nickel starting compound is introduced in the form of a solution, slurry, suspension or in the solid state into the reaction chamber,
    b) thermal treatment of the nickel starting compound in a treatment zone by means of a pulsating flow at a temperature of from 200 to 550°C,
    c) formation of nanocrystalline and nickel oxide material,
    d) discharge of the nanocrystalline nickel oxide material obtained in steps b) and c) from the reactor.

2.  Process according to Claim 1, **characterized in that** the nickel starting compound has an average particle size of less than 10 $\mu$m.

3.  Process according to Claim 2, **characterized in that** the particle size is obtained by milling of a suspension of the nickel starting compound.

**4.** Process according to any of Claims 1 to 3, **characterized in that** the inorganic nickel salt is nickel nitrate or a nickel hydroxide.

**5.** Process according to any of Claims 1 to 4, **characterized in that** further compounds apart from the nickel starting compound are used in the process.

**6.** Process according to Claim 5, **characterized in that** the further compounds are supports or precursors thereof, binders and/or promoters.

**7.** Process according to Claim 6, **characterized in that** aluminium or a transition metal is used as promoter.

**8.** Process according to Claim 7, **characterized in that** the transition metal is selected from the group consisting of W, Pd, Pt, Rh, Ru, Ag, Nb, Cu, Cr, Co, Mo, Fe and Mn.

**Revendications**

**1.** Procédé de fabrication d'un matériau d'oxyde de nickel nanocristallin, comprenant les étapes suivantes :

    a) l'introduction d'un composé de départ de nickel dans une chambre de réaction au moyen d'un fluide support, le composé de départ de nickel étant un sel inorganique de nickel et le composé de départ de nickel étant introduit dans la chambre de réaction sous la forme d'une solution, d'une suspension épaisse, d'une suspension ou à l'état d'agrégat solide,
    b) un traitement thermique du composé de départ de nickel dans une zone de traitement au moyen d'un courant pulsé à une température de 200 à 550 °C,
    c) la formation d'un matériau d'oxyde de nickel nanocristallin,
    d) le déchargement du matériau d'oxyde de nickel nanocristallin obtenu aux étapes b) et c) du réacteur.

**2.** Procédé selon la revendication 1, **caractérisé en ce que** le composé de départ de nickel présente une taille de particule moyenne inférieure à 10 $\mu$m.

**3.** Procédé selon la revendication 2, **caractérisé en ce que** la taille de particule est obtenue par broyage d'une suspension du composé de départ de nickel.

**4.** Procédé selon l'une quelconque des revendications 1 à 3, **caractérisé en ce que** le sel inorganique de nickel est du nitrate de nickel ou un hydroxyde de nickel.

**5.** Procédé selon l'une quelconque des revendications 1 à 4, **caractérisé en ce qu'**en plus du composé de départ de nickel, d'autres composés sont encore utilisés dans le procédé.

**6.** Procédé selon la revendication 5, **caractérisé en ce que** les autres composés sont des supports ou leurs précurseurs, des liants et/ou des promoteurs.

**7.** Procédé selon la revendication 6, **caractérisé en ce qu'**on utilise de l'aluminium ou un métal de transition en tant que promoteur.

**8.** Procédé selon la revendication 7, **caractérisé en ce que** le métal de transition est choisi dans le groupe comprenant W, Pd, Pt, Rh, Ru, Ag, Nb, Cu, Cr, Co, Mo, Fe et Mn.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006027270 A2

- DE 10109892 A1

**In der Beschreibung aufgeführte Nicht-Patentliteratur**

- **R. KRIEGEL ; CH. KAPS ; THÜRINGER WERKST-OFFTAG.** Röntgendiffraktometrische Rietveld-Analyse von nanokristallinen Precursoren und Keramiken. Verlag Dr. Köster, 2004, 51-56